# EUROPEAN PATENT APPLICATION

(11) **EP 4 248 761 A1**
(43) Date of publication of application: **27.09.2023**
(21) Application number: 23163333.0
(22) Date of filing: 22.03.2023
(51) Int. Cl.: A23L 3/3571, A23C 9/12, A23C 19/10, A23C 9/13

(54) **YEAST INHIBITION WITH BACILLUS SUBTILIS VIA IRON DEPLETION**

(30) Priority: 24.03.2022 EP 22163966
(71) Applicant: Chr. Hansen A/S, 2970 Hoersholm (DK)
(72) Inventor: Siedler, Solvej, 2970 Hoersholm (DK); Bidstrup, Susanne, 2970 Hoersholm (DK); Neves, Rute, 2970 Hoersholm (DK)

(57) **Abstract**

The present invention provides a method of controlling growth of yeasts, in particular robust yeasts, by applying *Bacillus subtilis.* More specifically, the present invention provides uses of *Bacillus subtilis* to inhibit or delay growth of yeast like *Yarrowia lipolytica* by reducing the free iron concentration in a food product which is preferably a fermented food product. Preferably the *Bacillus subtilis* is applied at a concentration of 10⁴ to 10⁹ CFU/ml, preferably 10⁶ to 10⁸ CFU/ml, most preferably 10⁷ CFU/ml.

## Description

### FIELD OF THE INVENTION

The present invention lies in the field of microbiology and relates to methods for controlling yeast spoilage in food products.

### BACKGROUND OF THE INVENTION

A major problem in the food industry is spoilage by unwanted microorganisms. According to the Food and Agriculture Organization (FAO), one in every four calories intended for human consumption is ultimately not consumed by humans. In a time of food shortages, with more than 800 million people suffering from hunger, the topic of food waste has become a prioritized issue for global policy makers and food manufacturers. In addition to the negative social and economic impacts for society, wasted food also inflicts related environmental problems, including unnecessary greenhouse gas emissions and inefficient uses of scarce resources such as water and land.

In particular in the dairy sector, 29 million tons of dairy products go to waste every year in Europe. One of the main challenges in keeping dairy products fresh is to manage contamination by yeast, which are naturally present everywhere, especially if there are disruptions in the cold chain from production to the consumer's table.

Yeasts are highly efficient at causing foods to spoil and are a problem for most food manufacturers. Since yeast can grow in different and even harsh environments, they are the major spoilage microorganisms found at all stages of the food process chain. It is therefore crucial to reduce food losses by controlling yeast contamination.

Chemical preservatives have been used traditionally to avoid yeast spoilage in food applications. However, in view of a strong social demand for less processed and preservative-free foods, there is a need for other methods of inhibiting or delaying growth of yeast.

WO 2019/202003 relates to a method of inhibiting or delaying growth of fungi in a product, comprising the step of reducing free manganese in the product to a concentration of below about 0.01 ppm in the product, wherein the step of reducing free manganese in the product comprises adding one or more manganese scavenging agents. The manganese scavenging agent is one or more bacteria strains and/or a chemical chelating material. Lactic acid bacteria are disclosed as manganese scavenging agents.

The addition of a chemical scavenging agent is undesirable in view of the demand for preservative-free foods. Thus, there is still a need for novel or improved methods which are effective for controlling yeast contamination for economic and environmental reasons.

### SUMMARY OF THE INVENTION

This problem is solved by the use of one or more sporulation-negative *Bacillus subtilis* strain(s) for inhibiting or delaying growth of at least one yeast in a food product, preferably fermented food product.

The present invention provides novel methods of inhibiting or delaying growth of at least one yeast in a food product comprising the step of adding an effective amount of one or more sporulation-negative *Bacillus subtilis* strain(s). Thus, the invention contributes to provide an effective solution to manage yeast growth by using biological means.

The inventors of the present invention have surprisingly found effective methods to manage yeast contamination and have identified iron as an important growth constraint for its growth. They have found that yeast growth can be inhibited by reducing the level of free iron in the food product by adding an effective amount of one or more *Bacillus subtilis* strain(s).

With the method of the present invention it is possible to inhibit contaminates which are often extremely difficult to inhibit such as the yeast *Yarrowia lipolytica. Yarrowia lipolytica,* a robust yeast and common contaminant in fermented milk products, is extremely difficult to inhibit by current bioprotective cultures such as lactic acid bacteria.

To combat the problem of microbial spoilage, the present invention provides in a first aspect a use of one or more *Bacillus subtilis* strain(s) for inhibiting or delaying growth of at least one yeast in a food product.

Preferably, the *Bacillus subtilis* reduces the free iron in said food product to a concentration below 0.5 ppm, such as below 0.4 ppm, below 0.3 ppm, below 0.2 ppm, or below 0.1 ppm.

Antibiotics have been used as therapeutics for nearly 100 years. Continuous use and misuse of antibiotics led to the development of antibiotic resistant bacteria that progressively increased mortality from multidrug-resistant bacterial infections, posing a tremendous threat to public health. It is thus preferred that the *Bacillus subtilis* does not synthesize or secrete antibiotics. More preferably, the *Bacillus subtilis* does not synthesize or secrete lipopetide antibiotic such as iturin.

The present invention also provides the use of a composition comprising sporulation-negative *Bacillus subtilis* for inhibiting or delaying growth of yeast, wherein the *Bacillus subtilis* is added to the food product for fermentation, preferably at a concentration of 10⁴ to 10⁹ CFU/ml, preferably 10⁶ to 10⁸ CFU/ml, most preferably 10⁷ CFU/ml.

In a second aspect, the present invention provides a method of inhibiting or delaying growth of at least one yeast in a food product, preferably fermented food product, comprising the step of adding an effective amount of one or more sporulation-negative *Bacillus subtilis* strain(s).

In a third aspect, the present invention provides a method of producing a food product comprising the steps of adding an effective amount of one or more sporulation-negative *Bacillus subtilis* strain(s) to inhibit or delay growth of at least one yeast in the food product, preferably fermented food product.

### FIGURES

- Figure 1: Growth of *Yarrowia lipolytica* and *Debaryomyes hansenii* after 5 days at 17°C in aqueous phase of yogurt, where *L. rhamnosus and L. paracasei* had been previously grown (+ *Bacillus)* or not (w/o *Bacillus)* as a control.
- Figure 2: Experimental procedure for yeast inhibition by *Bacillus subtilis* in aqueous phase of yogurt.
- Figure 3: *Yarrowia lipolytica* growth after 5 days at 17°C in aqueous phase of yogurt, where *Bacillus subtilis* had been previously grown (+ *Bacillus)* or not (w/o *Bacillus)* as a control. Iron was added to half of the samples.
- Figure 4: Iron limitation of growth of *Yarrowia lipolytica* and *D. hansenii* in aqueous phase (AQ) of yogurt.
- Figure 5: Experimental procedure for yeast inhibition by *Bacillus subtilis* in yogurt.
- Figure 6: *Yarrowia lipolytica* growth in aqueous phase of yogurt fermented with a starter culture and different *Bacillus subtilis* concentrations (0 to 10⁷ CFUs/ml).
- Figure 7: Growth of *Cryptococcus fragicola* (A) *Rhodotorula mucilaginosa* (B), *Debaryomyces hansenii* strain 1 (C) and *Debaryomyes hansenii* strain 2 (D) after 5 days at 17°C in aqueous phase of yogurt, where *Bacillus subtilis* had been previously grown (+ *Bacillus)* or not (w/o *Bacillus)* as a control. Iron (+ Fe) and manganese (+ Mn) were added to the indicated samples. Average and standard deviation of two biological independent experiments are shown.

### DETAILED DISCLOSURE OF THE INVENTION

Unless defined otherwise, all technical and scientific terms used herein have the same meaning as commonly understood by persons skilled in the art. Although any methods and materials equivalent or similar to those described herein can be used in the practice of the present disclosure, typical methods and materials are described. All methods described herein can be performed in any suitable order unless otherwise indicated herein or otherwise clearly contradicted by context.

Furthermore, the detailed information provided for the use of the present invention relates to the methods of the invention as well.

The present invention provides in a first aspect a use of one or more sporulation-negative *Bacillus subtilis* strain(s) for inhibiting or delaying growth of at least one yeast in a food product.

The use preferably comprises a step of adding an effective amount of one or more sporulation-negative *Bacillus subtilis* strain(s) to a food substrate, and fermenting the food substrate.

Preferably, the *Bacillus subtilis* does not synthesize or secrete antibiotics. In accordance with the present invention, the term antibiotic refers to lipopeptide antibiotics, including cyclic lipopeptides, such as iturin or surfactin.

In general, inhibiting means a decrease, whether partial or whole, in function and activity of cells or microorganisms. As used herein, the terms "to inhibit" and "inhibiting" in relation to at least one yeast mean that the growth, the number, or the concentration of yeast is the same or reduced. This can be measured by any methods known in the field of microbiology.

The term "to delay" in general means the act of stopping, postponing, hindering, or causing something to occur more slowly than normal.

Yeast growth can be measured with various methods known to a skilled person in the art. For example, yeast growth can be measured by density or size of colony, cell number, mycelial mass changes, spore production, hyphal growth, colony-forming units (CFU) and the like, depending on the fungus type and the product to which the method is applied. Yeast growth can also be observed by measuring the change in nutrient or metabolite concentrations, such as carbon dioxide release and oxygen uptake.

In the context of this invention, the terms "inhibition of yeast growth" or "inhibiting growth of yeast " refer to the inhibition of yeast cell proliferation. Inhibition can be observed by comparing the yeast growth, number or concentration in or on a product with one or more *Bacillus subtilis* strain(s) to a control. The control can comprise a different bacteria strain. The control can also be the otherwise identical composition but without the *Bacillus subtilis* strain(s).

The terms "delay of yeast growth" or "delaying growth of at least one yeast " refer to the slowing down of yeast cell proliferation. As used herein, "delaying growth of at least one yeast" refers to the act of postponing the growth of yeast. This can be observed by comparing the time needed for the yeast to grow to a given level in two products, one of which with one or more *Bacillus subtilis* strain(s) and the other one with a different bacteria strain or no bacteria strain.

Methods of determining yeast growth inhibition or delay are known to a skilled person in the art.

In some embodiments, "delaying growth of yeast" refers to delaying by 7 days, such as 8, 9, 10, 11, 12, 13, 14, 15, 16, 17, 18, 20, 21, 22, 23, 24, 25, 30, 35, 40, 45, 50, 55, 60 days.

Once present, yeast rapidly colonize, increase in population and take up nutrients from their immediate surroundings. In some embodiments, given that yeast may first come into contact with a product on the surface, it is within the spirit of the present invention that the step of inhibiting or delaying growth is carried out on parts of the product, such as parts on a surface of the product, for example in the exterior part of the product such as the coating or an outer layer.

"Free iron" or sometimes "iron" in accordance with the present invention refers to iron which is present in a product (i.e. forming part of product, such as within the product or on the surface of a product) that is available to be taken up by yeast.

The term "reduce" or "reducing" generally means lowering the amount of a substance in a given context. As used herein, the term "to reduce free iron" or "reducing free iron" means to reduce the amount of iron present in a product that is available to be taken up by at least one yeast.

The present invention provides a method of inhibiting or delaying growth of yeast in a fermented food product, preferably fermented milk product, wherein the free iron in the product is reduced to a concentration below about 0.5 ppm, more preferably 0.4 ppm, in the fermented food product.

Iron concentration or iron level as used herein is expressed in parts per million ("ppm") calculated on a weight/weight basis. Reducing free iron in a product to a concentration below a value means reducing free iron in the product or parts thereof such that the concentration of free iron in the entire product by weight is reduced.

It should be noted that when measuring free iron, such free iron does not include the iron which is found intracellularly. Rather, free iron refers to the iron that is found extracellularly, i.e. in the cell-free parts of the product, since they would be available to be taken up by the at least one yeast. Thus, concentration of free iron should be measured taking only extracellular iron into account. This can be done for example by removing cells (such as starter cultures) by centrifugation and obtaining cell-free supernatant, followed by measuring the iron in the cell-free supernatant.

Methods of measuring iron at low concentration are well known to a person skilled in the art. Such methods include atomic absorption spectroscopy, atomic emission spectroscopy, mass spectrometry, neutron activation analysis and x-ray fluorimetry. For example, one may refer to ISO 6732:2010, IDF 103:2010 which provides a spectrometric reference method for the determination of the iron content of milk and milk products.

As used herein, the term "bacteria strain" has its common meaning in the field of microbiology and refers to a genetic variant of a bacterium.

### Yeast

The inventors of the present invention have surprisingly discovered that at least one yeast can be inhibited by an effective amount of one or more *Bacillus subtilis* strains. Without being bound by theory, the present inventors have found that living *Bacillus subtilis* strains can act as an iron scavenger reducing the free iron in the product.

Thus, the one or more *Bacillus subtilis* strain(s) can be used for inhibiting or delaying growth of at least one yeast in a food product, wherein the growth of the at least one yeast is inhibited or delayed by reducing the free iron in the food product by adding an effective amount of the one or more *Bacillus subtilis* strain(s).

Free iron in a food product is preferably reduced to a concentration below 0.5 ppm, such as below 0.4 ppm, below 0.3 ppm, below 0.2 ppm, below 0.1 ppm, below 0.09 ppm, below 0.07 ppm, below 0.05 ppm, below 0.03 ppm, below 0.02 ppm, below 0.01 ppm, below 0.009 ppm, below 0.007 ppm, below 0.006 ppm, below 0.005 ppm or lower.

Preferably, the at least one yeast is selected from the group consisting of *Torulaspora* spp., *Cryptococcus* spp., *Saccharomyces* spp., *Yarrowia* spp., *Debaryomyces* spp., *Candida* spp. and *Rhodoturola* spp. In particular, the yeast is *Yarrowia* spp..

In a preferred embodiment, the at least one yeast is selected from the group consisting of *Yarrowia lipolytica, Rhodotorula mucilaginosa, Cryptococcus fragicola* and *Debayomyces hansenii.*

In a particularly preferred embodiment, the yeast is *Yarrowia lipolytica.*

The growth of the yeast in the food product may be inhibited by at least 25%, preferably at least 50%, such as at least 75%, at least 90% or at least 95%. This can be observed by comparing the amount of yeast in two products after a given time of incubation, one comprising one or more *Bacillus subtilis* strain(s) and the other one comprising a different bacteria strain or no bacteria strain. The amount of yeast growth can be measured by measuring the absorbance at 600 nm or plating on selective plates and then counting colony forming units (CFU).

In a preferred embodiment, the growth of the yeast in the food product is inhibited for at least two days, for example at least 3 days, at least 4 days, more preferably at least 5 days, at least 6 days, at least 7 days, at least 8 days, at least 9 days, at least 10 days, at least 11 days, at least 12 days, at least 13 days, and at least 14 days.

The amount of yeast in the food product may be reduced by at least 25%, preferably at least 50%, such as at least 75% or 90% after 5 days of incubation at 17°C compared to a food product comprising a different bacteria strain or no bacteria strain. The amount of yeast present in a sample can be measured by measuring the absorbance at 600 nm or plating on selective plates and then counting colony forming units (CFU).

In a preferred embodiment, the yeast is not present in (e.g., not detectable in) a food product after being stored at 17°C for at least two days, for example at least 3 days, at least 4 days, more preferably at least 5 days, at least 6 days, at least 7 days, at least 8 days, at least 9 days, at least 10 days, at least 11 days, at least 12 days, at least 13 days, and at least 14 days.

The growth of the yeast in the food product may be delayed by at least 1 day, preferably at least 7 days, such as 2 weeks. This can be observed by comparing the time needed for the yeast to grow to a given level in two products, one of which with one or more *Bacillus subtilis* strain(s) and the other one with a different bacteria strain or no bacteria strain.

### Bacillus subtilis strain(s)

In the use or methods of the present invention, one or more sporulation-negative *Bacillus subtilis* strain(s) are used. These strains may be iron scavenging bacteria strains which reduce the free iron in the product. According to the present disclosure, an iron scavenging bacteria strain is a bacteria strain which has iron transport systems and takes up iron from the medium while alive.

Iron uptake pathways in *Bacillus subtilis* have been studied previously, for example in Bsat, Nada, et al. "Bacillus subtilis contains multiple Fur homologues: identification of the iron uptake (Fur) and peroxide regulon (PerR) repressors." Molecular microbiology 29.1 (1998): 189-198 as well as Moore, Charles M., and John D. Helmann. "Metal ion homeostasis in Bacillus subtilis." Current opinion in microbiology 8.2 (2005): 188-195. A skilled person in the art is able to determine whether a given *Bacillus subtilis* can be used to scavenge iron using routine experiments.

The *Bacillus subtilis* strain may be a *Bacillus subtilis* subsp. *natto* strain. *Bacillus subtilis* subsp. *natto* is a non-pathogenic bacterium which is utilized for manufacturing the traditional Japanese fermented soy food *"natto". Bacillus subtilis* subsp. *natto* has received GRAS notification ("Generally Recognized as Safe") by the FDA and can be purchased from different manufacturers.

The *Bacillus subtilis* may be a sporulation-negative mutant of a sporulation-positive mother strain, wherein a sporulation-negative strain is a strain, which forms no spores when subjected to the following method:
i) inoculating 1 % of a culture of the strain to be tested, grown over night in Veal Infusion Broth at 37°C, 180 rpm, into 50 ml of a standard sporulation inducing medium contained in a 500 ml baffled shake flask,
ii) allowing the inoculated medium to grow overnight at 37°C while subjecting it to shaking at 200 rpm, and
iii) testing for spores the next day.

As a Veal Infusion Broth, Veal Infusion Broth (Difco 234420) may be used.

As a standard sporulation inducing medium, the following medium may be used:

### Difco Sporulation Medium (DSM) (per liter):

| | |
|---|---|
| Bacto Nutrient broth (Difco 234000) | 8g |
| 10% (w/v) KCI | 10 ml |
| 25 1.2% (w/v) MgS0₄ 7H₂O | 10 ml |
| Agar | 15 g |
| 1 M NaOH | ~1.5 ml (pH to 7.6) |
| 1 M Ca(NO₃)₂ | 1 ml (23.62 g/100 ml) |
| 0.01 M MnCl₂ | 1 ml (0.31 g/100 ml with 4H₂O) |
| 35 1 mM FeSO₄ | 1 ml (0.051 g/100 ml with 7H₂O) |

The sporulation-negative strain may be obtained using any conventional method of producing a sporulation-negative mutant bacterium strain of a sporulation-positive bacterium mother strain. In particular, sporulation-negative mutants of the mother strain may be obtained by UV mutagenesis followed by selection of sporulation-negative phenotype and stability testing.

Preferably, the *Bacillus* strain is a *Bacillus subtilis* subsp. *natto* strain selected from the group consisting of strains deposited as DSM 32588, DSM 32589, DSM 32606, DSM 32892, DSM 32893, DSM 32894, DSM 32895, DSM 33181, DSM 33182, or iron scavenging mutants or variants thereof. The mutants of one of these deposited strains can be obtained by using one of the deposited strains as a starting material.

The term "iron scavenging mutant or variant" is a variant having a substantially similar biological activity, i.e. iron uptake activities.

The term "mutant" refers to a strain which is derived from one of the deposited strains disclosed herein by means of, e.g., genetic engineering, radiation and/or chemical treatment. It is preferred that the mutant is a functionally equivalent mutant, i.e. a mutant which has substantially the same or improved properties as the deposited strain from which it was derived. In particular, the mutant has a substantially similar iron uptake activity.

Especially, the term "mutant" refers to strains obtained by subjecting a strain of the invention to any conventionally used mutagenization treatment including treatment with a chemical mutagen such as ethane methane sulphonate (EMS) or N-methyl-N'-nitro-N-nitroguanidine (NTG), UV light, or to a spontaneously occurring mutant. A mutant may have been subjected to several mutagenization treatments (a single treatment should be understood as one mutagenization step followed by a screening/selection 5 step), but it is presently preferred that no more than 20, or no more than 10, or no more than 5, treatments (or screening/selection steps) are carried out. In a presently preferred mutant less than 1 %, particularly less than 0.1 %, less than 0.01 %, more particularly less than 0.001 %, and most particularly less than 0.0001 % of the nucleotides in the bacterial genome have been replaced with another nucleotide, or deleted, compared to the mother strain. In a presently preferred mutant less than 50, particularly less than 30, more particularly less than 20, more particularly less than 10, and most particularly less than 5 the nucleotides in the bacterial genome have been replaced with another nucleotide, or deleted, compared to the mother strain.

As used herein, a "variant" refers to a variant form of a protein which shares at least 55%, 60%, 65%, 70%, 75%, 80%, 85%, 90%, 95%, 96%, 97%, 98%, 99% or 100% sequence identity with a particular nucleic acid or amino acid sequence of the protein.

In preferred embodiment, the bacteria strain is added to the food product at a concentration of 10⁴ to 10⁹ CFU/ml, such as 10⁵ to 10⁸ CFU/ml, preferably 10⁶ to 10⁸ CFU/ml, most preferably 10⁷ CFU/ml.

In one embodiment, a *Bacillus subtilis* subsp. *natto* strain is used for inhibiting or delaying growth of *Yarrowia lipolytica* in a food product.

In one embodiment, a *Bacillus subtilis* subsp. *natto* strain deposited as DSM 32588, DSM 32589, DSM 32606, DSM 32892, DSM 32893, DSM 32894, DSM 32895, DSM 33181, DSM 33182 or an iron scavenging mutant or variant thereof is used for inhibiting or delaying growth of *Yarrowia lipolytica* in a food product. In one preferred embodiment, the added *Bacillus subtilis* subsp. *natto* strain(s) reduces the free iron in said food product to a concentration below 0.5 ppm, such as below 0.4 ppm, below 0.3 ppm, below 0.2 ppm, or below 0.1 ppm.

### Food Products

"Food" and "food product" have the common meaning of these terms. "Food product" refers to any food or feed products suitable for consumption by humans or animals. Food products can be fresh or perishable food products as well as stored or processed food products. Food products include, but are not limited to, fruits and vegetables including derived products, grain and grain-derived products, dairy products, meat, poultry and seafood.

More preferably, the food product is a meat product or a dairy product. However, it should be noted that within the context of the present invention, the term "food product" does not refer to water as such.

The present invention is especially applicable for food products having intermediate to high water activity. Water activities (aw) determine viability and functionality of microorganisms. Water activity or aw is the partial vapor pressure of water in a substance divided by the standard state partial vapor pressure of water. In the field of food science, the standard state is most often defined as the partial vapor pressure of pure water at the same temperature. Using this particular definition, pure distilled water has a water activity of exactly 1.

The main food categories prone to yeast spoilage are dairy products having intermediate to high water activity, such as yogurt, cream, butter, cheese and the like. However, it is also envisioned that the present invention is suitable for food products having lower water activities, such processed meat, cereals, nuts, spices, dried milk, dried meats and fermented meats.

It is within the skills of an ordinary person in the art to adapt the *Bacillus subtilis* strain to the specific food types for optimal growth.

In preferred embodiment, the product where the use and methods disclosed in the present invention can be applied is a product having a water activity (aw) of less than 0.98, such as less than 0.97, less than 0.96, less than 0.95, less than 0.94, less than 0.93, less than 0.92, less than 0.91, less than 0.90, less than 0.89, less than 0.88, less than 0.87, less than 0.86, less than 0.85, less than 0.84, less than 0.83, less than 0.82, , less than 0.81, less than 0.80, less than 0.79, less than 0.78, less than 0.77, less than 0. 76, less than 0.75, less than 0.74, less than 0.73, less than 0.72, less than 0.71, less than 0.70 or lower.

In some embodiments, the food product is one having a water activity (aw) of 0.70 to 0.98, such as 0.75 to 0.97, such as 0.80 to 0.96, such as 0.85 to 0.95.

Methods for measuring water activity are known in the art, for example, as described in Fontana Jr, Anthony J. "Measurement of water activity, moisture sorption isotherms, and moisture content of foods." Water activity in foods: Fundamentals and applications (2007): 155-173.

Methods for measuring water activity are known in the art, for example, as described in Fontana Jr, Anthony J. "Measurement of water activity, moisture sorption isotherms, and moisture content of foods." Water activity in foods: Fundamentals and applications (2007): 155-173.

In one embodiment, the food products are fermented food products. Fermented food products are foods produced or preserved by the action of microorganisms. Fermentation means the conversion of carbohydrates into alcohols or acids through the action of a microorganism. Fermentation typically refers to the fermentation of sugar to alcohol using yeast. However, it may also involve the conversion of lactose to lactic acid. For example, fermentation may be used to make foods such as yogurt, cheese, salami, sauerkraut, kimchi, pickle and the like.

In one embodiment, the food product is a product of lactic acid fermentation, i.e. prepared by lactic acid bacteria (LAB) fermentation. "Lactic acid bacterium" designates a gram-positive, microaerophilic or anaerobic bacterium, which ferments sugars with the production of acids including lactic acid as the predominantly produced acid. The food product typically has a pH of 3.5 to 6.5, such as 4 to 6, such as 4.5 to 5.5, such as 5.

In a preferred embodiment, the food product is a dairy product. In such products, contamination with yeast is common and limits the shelf life of such products. "Dairy product" includes, in addition to milk, products derived from milk, such as cream, ice cream, butter, cheese and yogurt, as well as secondary products such as lactoserum and casein and any prepared food containing milk or milk constituents as the main ingredient, such as formula milk. The term "milk" is understood as the lacteal secretion obtained by milking any mammal, such as cows, sheep, goats, buffaloes or camels. In a preferred embodiment, the milk is cow's milk. The iron concentration of cow milk can vary, but 0.3-0.6 ppm may be considered a "normal" range. The term "milk" also includes protein/fat solutions made of plant materials, e.g. soy milk.

In one preferred embodiment, the dairy product is a fermented dairy product. The expression "fermented dairy product" means a food or feed product wherein the preparation of the food or feed product involves fermentation of a milk base with a lactic acid bacterium. "Fermented milk product" as used herein includes but is not limited to products such as thermophilic fermented milk products (e.g. yogurt) and mesophilic fermented milk products (e.g. sour cream and buttermilk, as well as fermented whey, quark and fromage frais).

In a preferred embodiment, the fermented dairy product is selected from the group consisting of set yogurt, stirred yogurt, drinking yogurt, low fat yoghurt, non-fat yoghurt, greek yoghurt, skyr, labneh, kefir, ymer, sour cream, sour milk, sour whipped cream, buttermilk, cultured milk, lassi, ayran, yakult, dahi, smetana, quark, tvarog, fresh cheese and cream cheese.

The term "yogurt" has its usual meaning and is generally defined in accordance with relevant official regulations and standards are well known in the field. Starter cultures used for making yogurt comprises at least one *Lactobacillus delbrueckii* subsp. *bulgaricus* strain and at least one *Streptococcus thermophilus* strain..

In another preferred embodiment, fermented food product is a cheese, including continental type cheese, fresh cheese, soft cheese, Cheddar, mascarpone, pasta filata, mozzarella, provolone, white brine cheese, pizza cheese, feta, brie, camembert, cottage cheese, Edam, Gouda, Tilsiter, Havarti or Emmental, Swiss cheese, and Maasdamer.

The fermented dairy product may be a product prepared by fermentation with thermophiles, i.e. thermophilic fermented food product. The term "thermophile" refers to microorganisms that thrive best at temperatures above 43°C. The industrially most useful thermophilic bacteria include *Streptococcus* spp. and *Lactobacillus* spp. The term "thermophilic fermentation" herein refers to fermentation at a temperature above 35°C, such as between 35°C and 45°C. "Thermophilic fermented dairy product" refers to fermented dairy products prepared by thermophilic fermentation of a thermophilic starter culture. Include in such products are for example yogurt, skyr, labneh, lassi, ayran and doogh.

In another embodiment, the fermented dairy product is a product prepared by fermentation with mesophiles, i.e. mesophilic fermented food product. The term "mesophile" refers to microorganisms that thrive best at moderate temperatures (15°C-40°C). The industrially most useful mesophilic bacteria include *Lactococcus* spp. and *Leuconostoc* spp. The term "mesophilic fermentation" herein refers to fermentation at a temperature between 22°C and 35°C. "Mesophilic fermented dairy product", which refers to fermented food products prepared by mesophilic fermentation of a mesophilic starter culture.

In a preferred embodiment, the fermented dairy product is a mesophilic fermented dairy product selected from the group consisting of sour cream, sour milk, buttermilk, cultured milk, smetana, quark, tvarog, cottage cheese, fresh cheese and cream cheese.

In one embodiment, a *Bacillus subtilis* subsp. *natto* strain is used for inhibiting or delaying growth of *Yarrowia lipolytica* in a fermented dairy product.

In one embodiment, a *Bacillus subtilis subsp. natto* strain deposited as DSM 32588, DSM 32589, DSM 32606, DSM 32892, DSM 32893, DSM 32894, DSM 32895, DSM 33181, DSM 33182 or an iron scavenging mutant or variant thereof is used for inhibiting or delaying growth of *Yarrowia lipolytica* in a fermented dairy product.

### Method of producing a food product

The present invention also relates to a method of producing a food product comprising the steps of adding an effective amount of one or more *Bacillus subtilis* strain(s) to inhibit or delay growth of at least one yeast. The inhibition or delay of growth may be achieved by reducing the level of free iron in the food product. Preferably, the amount of free iron is reduced to a concentration below 0.5 ppm, such as below 0.4 ppm, below 0.3 ppm, below 0.2 ppm, below 0.1 ppm, below 0.09 ppm, below 0.07 ppm, below 0.05 ppm, below 0.03 ppm, below 0.02 ppm, below 0.01 ppm, below 0.009 ppm, below 0.007 ppm, below 0.006 ppm, below 0.005 ppm or lower.

The *Bacillus subtilis* strain(s) may be added in the form of an antimicrobial composition. The antimicrobial composition typically comprises the bacteria in a concentrated form including frozen, dried or freeze-dried concentrates. The composition may additionally contain as further components cryoprotectants and/or conventional additives including nutrients. Suitable cryoprotectants that may be added to the compositions of the invention are components that improve the cold tolerance of the microorganisms, such as mannitol, sorbitol, sodium tripolyphosphate, xylitol, glycerol, raffinose, maltodextrin, erythritol, threitol, trehalose, glucose and fructose. Other additives to may include, e.g., carbohydrates, flavors, minerals, enzymes (e.g. rennet, lactase and/or phospholipase).

When using a bacteria strain in a method of producing a food product, the skilled person is able to adjust various parameters such as pH, temperature, and amount of bacteria to achieve the desired results, taking into consideration the examples provided in this invention as well as the properties of the food product such as water activity, nutrients, level of naturally occurring iron, shelf life, storage conditions, packing, etc.

The product in which growth of at least one yeast is inhibited or delayed is preferably packaged to further limit contact with yeast. It is also preferred to store the product under cold temperature (below 15°C) to help extend shelf life.

The methods disclosed herein are particularly useful to inhibit or delay yeast growth in fermented milk product such as thermophilic and mesophilic fermented milk product, for example a yogurt product. The term "fermented milk product" is a term generally defined in accordance with relevant official regulations and the standards are well known in the field. For example, symbiotic cultures of *Streptococcus thermophilus* and *Lactobacillus delbrueckii* subsp. *bulgaricus* are used as starter culture for yogurt, whereas *Lactobacillus acidophilus* is used to make acidophilus milk. Other mesophilic lactic acid bacteria are used to produce quark or fromage frais.

For fermented food product, the one or more *Bacillus subtilis* strain may be added before, at the start, during or after fermentation. Depending on parameters chosen, the reduction of iron level to a preferred level may take several hours, such as at least 5 hours, such as at least 10 hours, such as at least 15 hours, such as at least 20 hours, such as at least 1 day, 2 days, 3 days or more. A skilled person in the art will be able to choose appropriate parameters, depending on the product where inhibition or delay of yeast is desired.

The invention provides a method of preparing a fermented food product, comprising adding a starter culture and an effective amount of one or more *Bacillus subtilis* strain(s) to a food substrate, fermenting the substrate for a period of time until a target pH is reached.

As used herein, the term "food substrate" refers to the substrate in which fermentation is to be carried out. To make fermented dairy products, the food substrate is a milk base. "Milk base" is broadly used in the present invention to refer to a composition based on milk or milk components which can be used as a medium for growth and fermentation of a starter culture. "Milk" generally refers to the lacteal secretion obtained by milking of any mammal, such as cows, sheep, goats, buffaloes or camels. Milk base can be obtained from any raw and/or processed milk material as well as from reconstituted milk powder. Milk base can also be plant-based, i.e. prepared from plant material e.g. soy milk. Milk base prepared from milk or milk components from cows is preferred.

Milk bases include, but are not limited to, solutions/suspensions of any milk or milk like products comprising protein, such as whole or low-fat milk, skim milk, buttermilk, reconstituted milk powder, condensed milk, dried milk.

Milk base may also be lactose-reduced depending on the need of the consumers. Lactose- reduced milk can be produced according to any method known in the art, including hydrolyzing the lactose by lactase enzyme to glucose and galactose, or by nanofiltration, electrodialysis, ion exchange chromatography and centrifugation.

To ferment the milk base, a starter culture is added. The term "starter" or "starter culture" as used in the present context refers to a culture of one or more food-grade microorganisms in particular lactic acid bacteria, which are responsible for the acidification of the milk base.

The at least one *Bacillus subtilis* can be added before, at the start, or during the fermentation at the same time or at a different time with the starter culture. In a further alternative, the at least one *Bacillus subtilis* is added to the fermented product at the start the fermentation.

After adding the starter culture and bacteria strain and subjecting the milk base to a suitable condition, the fermentation process begins and continues for a period of time. A person of ordinary skill in the art knows how to select suitable process conditions, such as temperature, oxygen, addition of carbohydrates, amount and characteristics of microorganism(s) and the process time it takes. This process may take from three, four, five, six hours or longer.

These conditions include the setting of a temperature which is suitable for the particular starter culture strains. For example, when the starter culture comprises mesophilic lactic bacteria, the temperature can be set to 30°C, and if the culture comprises thermophilic lactic acid bacterial strains, the temperature is kept in the range of 35°C to 50°C, such as 40°C to 45°C. The setting of the fermentation temperature also depends on the enzyme(s) added to the fermentation which can be readily determined by a person of ordinary skill in the art. In a particular embodiment of the invention the fermentation temperature is between 35°C and 45°C, preferably between 37°C and 43°C, and more preferably between 40°C and 43°C. In another embodiment, the fermentation temperature is between 15°C and 35°C, preferably between 20°C and 35°C, and more preferably between 30°C and 35°C.

Fermentation can be terminated using any methods known to in the art. In general, depending on various parameters of the process, the fermentation can be terminated by making the milk base unsuitable for the strain(s) of the starter culture to grow. For example, termination can be carried out by rapid cooling of the fermented milk product when a target pH is reached. It is known that during fermentation acidification occurs, which leads to the formation of a three- dimensional network consisting of clusters and chains of caseins. The term "target pH" means the pH at which the fermentation step ends. The target pH depends on the fermented milk product to be obtained and can be readily determined by a person of ordinary skill in the art.

In a particular embodiment of the invention, fermentation is carried out until at least a pH of 5.2 is reached, such as until a pH of 5.1, 5.0, 4.9, 4.8, 4.7, 4.6, 4.5, 4.4, 4.3, 4.2, 4.1, 4.0, 3.9, 3.8 or 3.7 is reached. Preferably, the fermentation is carried out until a target pH between 4.0 and 5.0 and more preferably between 4.0 and 4.6 is reached. In a preferred embodiment, the fermentation is carried out until target pH below 4.6 is reached.

In a further embodiment, the method further comprises packing the food product to reduce contact with yeast present in the surroundings.

### DEPOSIT AND EXPERT SOLUTION

The applicant requests that a sample of the deposited microorganisms stated below may only be made available to an expert, subject to available provisions governed by Industrial Property Offices of States Party to the Budapest Treaty, until the date on which the patent is granted.

**Table 1: Deposits made at a Depositary institution having acquired the status of international depositary authority under the terms of the Budapest Treaty on the International Recognition of the Deposit of Microorganisms for the Purposes of Patent Procedure: Leibniz Institute DSMZ-German Collection of Microorganisms and Cell Cultures Inhoffenstr. 7B, 38124 Braunschweig, Germany.**

| **Strain** | **Accession No.** | **Deposit date** |
|---|---|---|
| *Bacillus subtilis* subsp. *natto* | DSM 32588 | 2017.8.16 |
| *Bacillus subtilis* subsp. *natto* | DSM 32589 | 2017.8.16 |
| *Bacillus subtilis* subsp. *natto* | DSM 32606 | 2017.8.23 |
| *Bacillus subtilis* subsp. *natto* | DSM 32892 | 2018.8.8 |
| *Bacillus subtilis* subsp. *natto* | DSM 32893 | 2018.8.8 |
| *Bacillus subtilis* subsp. *natto* | DSM 32894 | 2018.8.8 |
| *Bacillus subtilis* subsp. *natto* | DSM 32895 | 2018.8.8 |
| *Bacillus subtilis* subsp. *natto* | DSM 33181 | 2019.6.19 |
| *Bacillus subtilis* subsp. *natto* | DSM 33182 | 2019.6.19 |

### EXAM PLES

The invention described and claimed herein is not to be limited in scope by the specific aspects herein disclosed, since these aspects are intended as illustrations of several aspects of the invention. Any equivalent aspects are intended to be within the scope of this invention. Indeed, various modifications of the invention in addition to those shown and described herein will become apparent to those skilled in the art from the foregoing description and the following examples. In the case of conflict, the present disclosure including definitions will prevail.

### EXAMPLE 1: Inhibition of Yarrowia lipolytica and Debaryomyces hansenii 1 using Lactobacillus bacteria

In Example 1, a challenge test with *Yarrowia lipolytica* and *Debaryomyces hansenii* 1 in the aqueous phase of yogurt with (+Lactobacillus) and without (REF) a manganese scavenging Lactobacillus culture containing *L. rhamnosus and L. paracasei.*

Milk was fermented with a starter culture (YF-L901, Chr. Hansen A/S, Denmark) with and without the presence of the *Lactobacillus* culture (containing 10^7 cells of a *Lactobacillus* culture containing *L. rhamnosus and L. paracasei)* and after fermentation the yogurt was sedimented by centrifugation.

150 µl of the individual samples were transferred to a 96-well low plate. Afterwards *Yarrowia lipolytica* and *Debaryomyces hansenii* was added to all samples in a final concentration of 50 CFU/ml. After 5 days of incubation at 17°C, the growth was measured by absorbance at 600 nm in a plate reader.

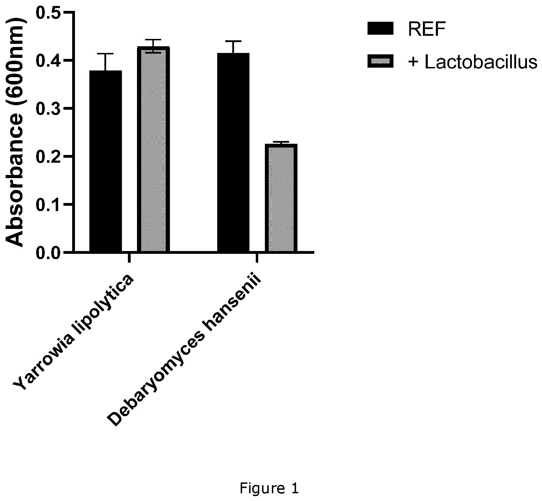

As shown in Figure 1, *Yarrowia lipolytica* was not affected by the reduction in manganese caused by the presence of the *Lactobacillus* culture. In contrast, *Debaryomyces hansenii* was sensitive to manganese depletion.

### EXAMPLE 2: Inhibition of Yarrowia lipolytica

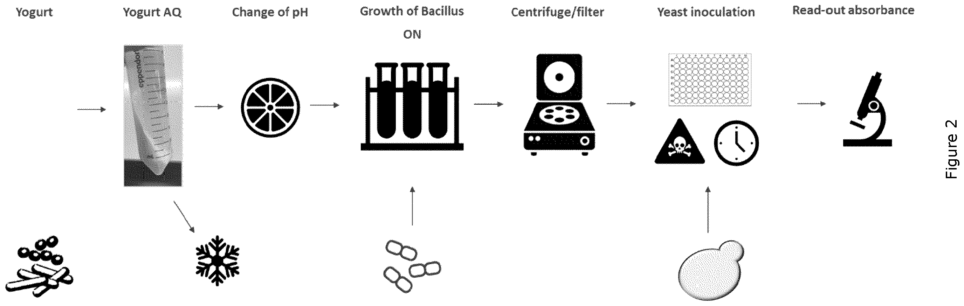

In Example 2, a challenge test with *Yarrowia lipolytica* in the aqueous phase of yogurt previously fermented with *Bacillus subtilis* was carried out. A schematic representation of the challenge test can be found in Figure 2.

Samples with presence/absence of *Bacillus subtilis* and presence/absence of additional iron were prepared for *Yarrowia lipolytica* inoculation.

Milk was fermented with a starter culture (YF-L901) and after fermentation the yogurt was sedimented by centrifugation. The supernatant was sterile filtered and the pH was set to a value of 6.0 to obtain the prepared aqueous phase. The pH of the aqueous phase of yoghurt was set to pH 6 because the *Bacillus* strain could not grow at pH 4.3. The phase was inoculated with *Bacillus subtilis* subsp. *natto* strain DSM 33181 to a final OD600 of 0.05 from the grown pre-culture, left standing overnight and then again sedimented. Another sample of the aqueous phase not inoculated with *Bacillus subtilis* was prepared as a control.

Afterwards, iron (3 ppm) was added to half of the prepared aqueous phases of the yogurts (for both the yogurt fermented with *Bacillus* and the control yogurt that was not). The other half of the supernatants did not receive iron addition.

150 µl of the individual samples were transferred to a 96-well low plate and *Yarrowia lipolytica* (CHCC16375) was added to all samples in a final concentration of 50 CFU/ml.

After 5 days of incubation at 17°C, the growth was measured by absorbance at 600 nm in a plate reader.

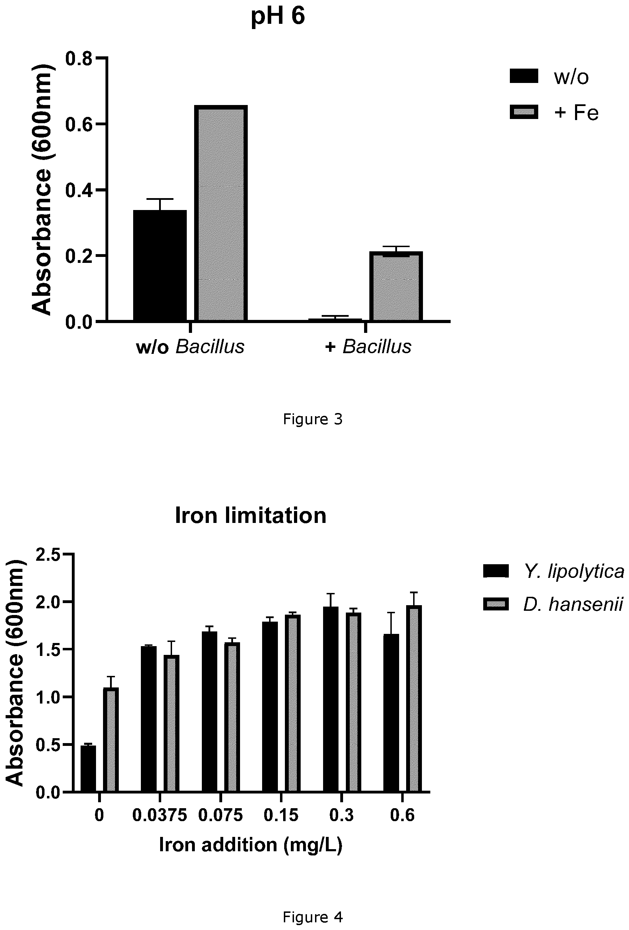

As shown in Figure 3, *Yarrowia lipolytica* did not grow where *Bacillus subtilis* had been grown but grew well in the absence of *Bacillus.* Furthermore, growth of *Yarrowia* increased when iron was supplemented. This shows that the growth of *Yarrowia* is limited by the available iron and that *Bacillus* was able to reduce the iron concentration in aqueous phase of yogurt.

Addition of glucose did not change the growth of *Yarrowia lipolytica* (data not shown) indicating that a carbon source is not the limiting factor. Therefore, iron limitation appears to be the mode of action behind the inhibition.

### EXAMPLE 3: Growth of Yarrowia lipolytica and Debaryomyces hansenii in the presence of iron

This example shows the growth of the two yeasts in different concentration of iron.

Aqueous phase of yogurt was prepared as described in Example 2. For this, milk was fermented with a starter culture (YF-L901) and after fermentation the yogurt was sedimented by centrifugation and the supernatant was sterile filtered. The sterile aqueous phase of yogurt was transferred to 96-low well plates individually (150 µl) and inoculated with either *Yarrowia lipolytica* or *Debaryomyces hansenii* to a final concentration of 50 CFU/ml. Different concentrations of iron ranging from 0.038 to 0.6 mg/L were added to the different wells and the plate were incubated at 17°C for 5 days. Afterwards, the yeast growth was measured by absorbance in a plate reader at 600 nm.

Figure 4 shows that growth of *Yarrowia lipolytica* and *Debaryomyces hansenii* 1 was limited by the available iron concentration in the milk. The final optical density of *Yarrowia lipolytica* increased significantly upon addition of iron. The same trend was also observed for *Debaryomyces hansenii,* but to a lesser degree.

### EXAMPLE 4: Inhibition of Yarrowia lipolytica in yogurt

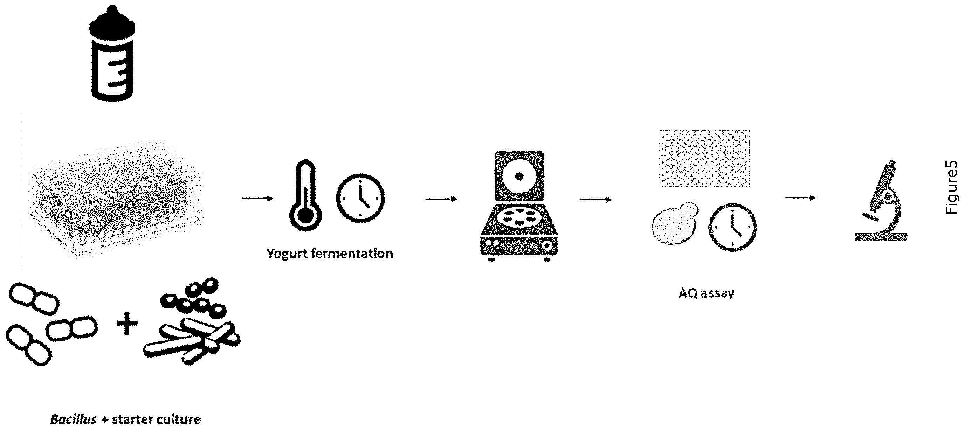

This example shows the inhibition of *Yarrowia lipolytica* in yogurt by *Bacillus,* which was directly added together with the starter culture during fermentation. A schematic representation of the *Yarrowia* inhibition by *Bacillus* in yogurt can be found in Figure 5.

For this, 10⁷, 5×10⁶ and 10⁶ *Bacillus* cells (*Bacillus subtilis var. natto* strain, DSM 33181) were added to milk containing a yogurt starter culture (YF-L901, *Streptococcus thermophilus and Lactobacillus bulgaricus*). After fermentation, the sample was sedimented by centrifugation and the supernatant was filtered (cut-off 0.2 µm). Afterwards, the samples were aliquoted into a low well plate (150 µl) and inoculated with *Yarrowia lipolytica.* The plate was incubated for 5 days at 17°C and the yeast growth was measured by absorbance at 600 nm in a plate reader.

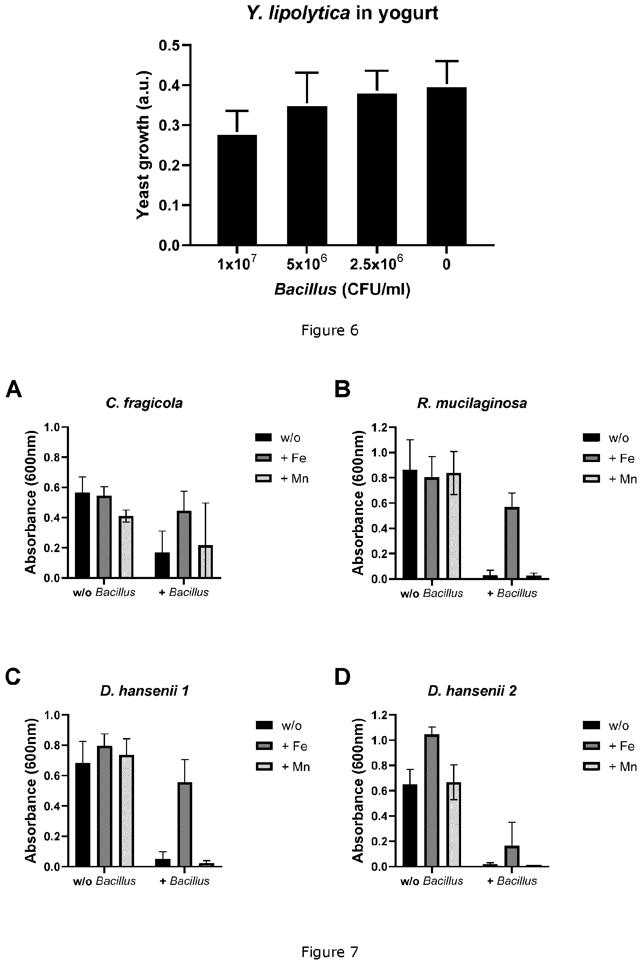

As shown in Figure 6, *Yarrowia lipolytica* inhibition was higher at increased *Bacillus subtilis* concentrations. A dose response of addition of *Bacillus* correlated with the growth of *Yarrowia.*

### EXAMPLE 5: Inhibition of further yeasts by Bacillus subtilis

This example further shows that *Bacillus* can be used not only to inhibit *Yarrowia lipolytica* but also other yeast species that are sensitive to iron limitation. In this example, *Rhodotorula mucilaginosa, Cryptococcus fragicola,* and *Debaryomyces hansenii* were used as yeast strains.

Milk was fermented with a starter culture and after fermentation the yogurt was sedimented by centrifugation. The supernatant was sterile filtered and pH was set to a value of 6.0. Afterwards, a sample of the aqueous phase was inoculated with *Bacillus subtilis var. natto* strain DSM 33181 overnight and then again sedimented, and the supernatant was sterile filtered. Another sample of the aqueous phase not inoculated with *Bacillus subtilis* was used as comparison.

Afterwards, iron (1 ppm) was added to respective samples (which had been fermented with *Bacillus* and not). 150 µl of the individual samples were transferred to a 96-well low plate, and a yeast (*Rhodotorula mucilaginosa, Cryptococcus fragicola, Debaryomyces hansenii* 1 *or Debaryomyces hansenii* 2) was added to the samples at a final concentration of 50 CFU/ml. After 5 days of incubation at 17°C, the growth was measured by absorbance at 600 nm in a plate reader.

As shown in Figure 7, growth of all tested yeasts was inhibited in samples where *Bacillus* had been grown. Iron addition restored the growth of the yeasts in aqueous phase with *Bacillus,* while iron addition did not. These data suggest that the concentration of iron serves as the limiting factor for the growth of tested yeasts.

## Claims

**1.** Use of one or more sporulation-negative *Bacillus subtilis* strain(s) for inhibiting or delaying growth of at least one yeast in a fermented food product.

**2.** A method of inhibiting or delaying growth of at least one yeast in a fermented food product, comprising a step of adding an effective amount of one or more sporulation-negative *Bacillus subtilis* strain(s) to a food substrate, and fermenting the food substrate.

**3.** A method of producing a fermented food product comprising steps, wherein an effective amount of one or more sporulation-negative *Bacillus subtilis* strain(s) is added to ferment the food product.

**4.** The use or method according to claims 1 to 3, wherein the at least one yeast is selected from the group consisting of *Torulaspora* spp., *Cryptococcus* spp., *Saccharomyces* spp., *Yarrowia* spp., *Debaryomyces* spp., *Candida* spp. *and Rhodoturola* spp., preferably *Yarrowia* spp.

**5.** The use or method according to any of the preceding claims, wherein inhibiting or delaying growth of at least one yeast in the food product is achieved by reducing the amount of free iron by the *Bacillus subtilis* strain(s) during fermentation.

**5.** The use or method according to any of the preceding claims, wherein the at least one yeast is selected from the group consisting of Yarrowia lipolytica, Rhodotorula mucilaginosa, Cryptococcus fragicola and Debayomyces hansenii, preferably Yarrowia lipolytica.

**6.** The use or method according to any of the preceding claims, wherein the *Bacillus subtilis* strain(s) is a *Bacillus subtilis* subsp. *natto* strain.

**7.** The use or method according to claim 6, wherein the *Bacillus subtilis* subsp. *natto* strain(s) is/are selected from the group consisting of strains deposited as DSM 32588, DSM 32589, DSM 32606, DSM 32892, DSM 32893, DSM 32894, DSM 32895, DSM 33181, DSM 33182 or an iron scavenging mutant or variant thereof.

**8.** The use or method according to any of the preceding claims, wherein the one or more *Bacillus subtilis* strain(s) is/are sporulation-negative *Bacillus subtilis* strain(s), wherein a sporulation-negative strain is a strain, which forms no spores when subjected to the following method:
i) inoculating 1 % of a culture of the strain to be tested, grown over night in Veal Infusion Broth at 37°C, 180 rpm, into 50 ml of a standard sporulation inducing medium contained in a 500 ml baffled shake flask,
ii) allowing the inoculated medium to grow overnight at 37°C while subjecting it to shaking at 200 rpm, and
iii) testing for spores the next day.

**9.** The use or method according to any of the preceding claims wherein the bacteria strain is added to the food product at a concentration of 104 to 109 CFU/ml, preferably 106 to 108 CFU/ml, most preferably 107 CFU/ml.

**10.** The use or method according to any of the preceding claims, wherein the food product is a fermented food product, and wherein the one or more *Bacillus subtilis* strain is added before, at the start, during or after fermentation.

**11.** The use or method according to any of the preceding claims, wherein the food product is a fermented dairy product, and optionally, wherein the fermented dairy product is selected from the group consisting of set yogurt, stirred yogurt, drinking yogurt, low fat yoghurt, non-fat yoghurt, kefir, ymer, sour cream, sour milk, sour whipped cream, buttermilk, cultured milk, smetana, quark, tvarog, fresh cheese and cream cheese.

**12.** The use or method according to claim 11, wherein the fermented dairy product is a mesophilic fermented dairy product selected from the group consisting of sour cream, sour milk, buttermilk, cultured milk, smetana, quark, tvarog, cottage cheese, fresh cheese and cream cheese.

**13.** The use or method according to any of the preceding claims, wherein the amount of the yeast in the food product is reduced by at least 25%, preferably at least 50% such as at least 75% or at least 90% after 5 days of incubation at 17°C compared to a food product not containing the *Bacillus subtilis* strain(s).

**14.** The use or method according to any of the preceding claims, wherein the amount of free iron is reduced in the product with regard to a product not containing the *Bacillus subtilis* strain(s).

**15.** The use or method according to any of the preceding claims, wherein inhibiting or delaying growth of at least one yeast in a food product is achieved by reducing the amount of free iron by the *Bacillus subtilis* strain(s) to less than 0.4 ppm in the food product.
